# EUROPEAN PATENT APPLICATION

(11) **EP 2 610 477 A1**
(43) Date of publication of application: **03.07.2013**
(21) Application number: 10854166.5
(22) Date of filing: 28.10.2010
(51) Int. Cl.: F02M 43/04, F02D 19/06, F02M 61/10, F02M 61/16

(54) **TWO-PHASE FUEL INJECTION VALVE FOR DIESEL ENGINE AND GAS ENGINE INCLUDING NOZZLE HAVING PUMPING FUNCTION**

(30) Priority: 02.07.2010 KR 20100063772
(71) Applicant: Hyundai Heavy Industries Co., Ltd., Ulsan 682-792 (KR)
(72) Inventor: PARK, Deuk-Jin, Ulsan 681-716 (KR); KIM, Eung-Sung, Ulsan 682-809 (KR); KIM, Ju-Tae, Ulsan 682-762 (KR); HEO, Kwang-Cheol, Ulsan 680-010 (KR); KIM, Jong-Suk, Ulsan 680-014 (KR); HA, Eun, Uiwang-si Gyeonggi-do 437-120 (KR)
(74) Representative: Neugebauer, Jürgen
(86) International application number: PCT/KR2010/007436
(87) International publication number: WO 2012/002620

(57) **Abstract**

The present invention relates to a dual fuel injection valve having a pumping nozzle for a diesel engine and a gas engine, and an objective of the present invention is to provide a fuel injection valve in which, by using two kinds of fuel entering into a fuel valve, a warming up and injection of pilot fuel may be performed in an initial injection and injection of main fuel may be performed subsequently such that subsequent dual fuel is used for combustion, thereby increasing fuel injection performance.

In a fuel injection valve for a diesel engine or a gas engine for injecting fuel to a cylinder, provided is a dual fuel injection valve having a pumping nozzle for the diesel engine and the gas engine including: the dual fuel injection valve including a fuel valve block (110) in which a fuel passage to which first and secondary fuel is introduced through a high pressure pipe is formed inside thereof, the first and secondary fuel being the same fuel system or different fuel systems; a cylinder/needle valve (506) which moves upward by a pressure difference of the secondary fuel introduced through the fuel passage formed in the fuel valve block (110) to inject the primary fuel to a pilot nozzle hole; and a main needle valve (143) which, after injecting the primary fuel by pressing the cylinder/needle valve (506), moves upward by the pressure difference of the secondary fuel introduced through a connected fuel passage to inject the primary fuel to a main nozzle hole (161).

## Description

### Technical Field

The present invention relates to a dual fuel injection valve having a pumping nozzle for a diesel engine and a gas engine and, more particularly, to a hybrid fuel injection valve which enables primary injection of primary fuel by using an internal pumping structure instead of using an external pressure pump and uses pressure used for primary fuel injection as pump pressure for secondary fuel injection.

### Background Art

Generally, a conventional diesel engine has one needle valve and one spring, wherein the needle valve is opened when fuel of higher pressure than opening pressure is introduced and is closed when the fuel of lower pressure than the opening pressure is introduced. In this manner, when fuel of high pressure formed in a fuel pump enters to a fuel valve, if the pressure of the fuel in the fuel valve is higher than the opening pressure, the spring lifts the needle valve against a force pressing against the needle valve through pressure of fuel oil, such that the fuel is injected into a cylinder through multiple nozzle holes located on an end terminal of a nozzle.

Such a method consists of one mechanism in which all nozzle holes are opened according to a predefined opening pressure, and thus, after the opening pressure is formed, even if higher pressure is introduced to the fuel valve, injection is only continued through a predefined number of nozzle holes.

Meanwhile, in case of a gas engine, two fuel injection valves, one for a pilot valve and one for a valve for primarily gas, or two needle cylinders are provided to be used, and in order to provide two fuel supply paths corresponding thereto, a pipe line that conforms to the two valves needs to be installed, thereby requiring two governors for timing control, a linkage device, etc.

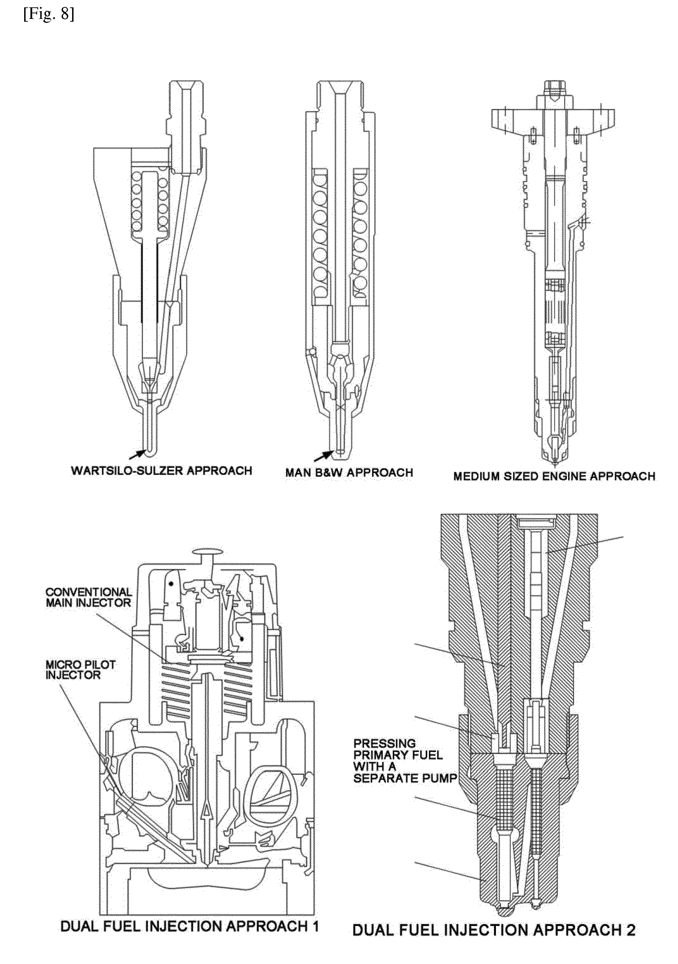

FIG. 8 illustrates a Wartsila-Sulzer approach, an MAN-B & W approach, and a medium sized engine which is a typical form of a conventional fuel valve.

In the Wartsila-Sulzer approach, when pressure is greater than the opening pressure but fails to form high pressure, fuel flows into the cylinder, rather than being injected into the cylinder through multiple nozzle holes fabricated on the nozzle. Also, even after the fuel injection is finished, a space (SAC volume) between the closed needle valve and the nozzle hole is large such that residue fuel remaining in this space flows into the cylinder, thereby causing the problem as described above.

Also, in the MAN-B&W approach, a needle valve in a slide type is adopted to reduce the SAC volume; however, the MAN-B&W approach has limitation in that pressure above the opening pressure cannot be actively coped with. In other words, the SAC volume is fixed.

Also, in a case of the medium sized engine, the above described MAN-M&W approach and the Wartsila-Sulzer approach are complemented by creating an injection hole to be located near a combustion chamber to a maximum extent in order to reduce the SAC volume, which causes a problem in that durability of a nozzle portion in opening and closing the needle is degraded.

Namely, the above described approaches have disadvantageous in that, as shown in FIG. 8, in order to open at a predetermined pressure, spring pressure is increased and fuel pressure is manipulated to increase to adjust the opening pressure in a device other than the fuel valve (i.e., pressure is not increased by the fuel valve itself but increased by using an additional pump located in front of an entrance of the fuel valve), and only one kind of fuel is used.

Also, a fuel injection valve in a dual fuel type as dual fuel injection apparatuses 1, 2 shown in a lower portion of FIG. 8, two cylinders are operated such that two governors and two linkages are required, and two high pressure pumps are required in order to form high pressure of primary fuel and secondary fuel, and a separate line for cooling needs to be formed within an injector, thereby causing a complex structure.

### Disclosure

### Technical Problem

Therefore, an objective of the present invention is to provide a fuel injection valve in which, by using two kinds of fuel entering into a fuel valve, a warming up and injection of pilot fuel is performed in an initial injection and injection of main fuel is performed subsequently such that subsequent dual fuel is used for combustion, thereby increasing fuel injection performance.

Also, another objective of the present invention is to provide a fuel injection valve in a hybrid structure in which, instead of requiring two kinds of separate pump devices, a piston is pushed to open two injection holes in one pump to press and inject primary fuel, and pressure thereof opens a needle valve of secondary fuel to inject the secondary fuel, thereby increasing fuel efficiency to reduce harmful gas (smoke, NOx).

### Technical Solution

In accordance with an aspect of the present invention which achieves the above objectives and solves the disadvantages in the prior art, provided is a dual fuel injection valve having a pumping nozzle for a diesel engine and a gas engine, in a fuel injection valve for the diesel engine or the gas engine for injecting fuel to a cylinder, the dual fuel injection valve including a fuel valve block in which a fuel passage to which first and secondary fuel is introduced through a high pressure pipe is formed inside thereof, the first and secondary fuel being the same fuel system or different fuel systems; a cylinder/needle valve which moves upward by a pressure difference of the secondary fuel introduced through the fuel passage formed in the fuel valve block to inject the primary fuel to a pilot nozzle hole; and a main needle valve which, after injecting the primary fuel by pressing the cylinder/needle valve, moves upward by the pressure difference of the secondary fuel introduced through a connected fuel passage to inject the primary fuel to a main nozzle hole.

The present invention is characterized in that the cylinder/needle valve includes a pressing piston head portion formed on an upper portion thereof by groove machining; a primary fuel pressing piston having a lower portion inserted to the pressing piston head portion and a fuel pressing hole formed at a certain point thereof, the primary fuel pressing piston being elastically supported by a primary fuel piston spring; a pressure piston connected to a residue pressure maintaining valve and a fuel main passage pipe through a fuel passage to receive pressure of the secondary fuel and to press an upper portion of the primary fuel pressing piston; and the residue pressure maintaining valve of which upper portion is connected to the fuel passage in order to restore the pressure piston which is pressed for injecting the primary fuel.

The present invention is characterized in that, when the primary fuel cylinder/needle valve is closed, the primary fuel is switched to lower pressure such that the primary fuel is drained outside of the injection valve through a primary fuel drain line via an area of a chamber A, which is a cooling area of the secondary fuel and located at a lower portion of the main needle valve.

The present invention is characterized in that a bush is installed around the main needle valve 143 such that the bush 130 prevents mixing of the primary fuel which is pilot fuel and the secondary fuel which is main fuel introduced to a chamber B 302 and serves as a medium for cooling and heat exchanging high temperature of a main nozzle hole 161 at an area of a chamber A 301.

### Advantageous Effects

As described above, the present invention has advantages in that a fuel injection apparatus used in an engine which uses dual fuel does not require two separate pumps and one pumping structure is operated within a valve so as to move two needles in the one pumping structure, thereby enabling pumping at high pressure and enabling pumping dual fuel at high pressure for injection.

Also, the present invention has a significant industrial applicability since the present invention has advantages in that two kinds of subsequent fuel are injected, without mixing, to an inside of a combustion chamber to be combusted such that a combustion pattern using two kinds of fuel, i.e., marine diesel oil (MDO) + heavy fuel oil (HFO) and MDO + gas fuel is achieved, thereby reducing harmful gas (smoke, Nox) within the combustion chamber and improving fuel efficiency.

### Description of Drawings

FIG. 1 is an example cross sectional view illustrating an exemplary embodiment of the present invention.
FIG. 2 is an enlarged view of a portion of FIG. 1.
FIG. 3 is an example cross sectional view illustrating an exemplary embodiment prior to pressing a dual fuel pressure piston by heavy fuel oil (HFO), gas fuel and prior to an operation of opening fuel by marine diesel oil (MDO).
FIG. 4 is an example cross sectional view illustrating an exemplary embodiment in which a pressure piston is pushed for pumping by pressure of HFO, gas fuel such that fuel pressure which opens primary fuel (pilot fuel, MDO) is operated to discharge fuel oil according to the present invention.
FIG. 5 is an example cross sectional view illustrating an exemplary embodiment of discharging fuel oil after fuel pressure which opens main fuel is operated according to the present invention.
FIG. 6 is an example view in which a lower portion of a hybrid nozzle block according to the present invention is cut open (a right side is an injection hole for main fuel and a left side is a pilot injection hole).
FIG. 7 is an internal configuration view illustrating an entire configuration of a nozzle including a chamber for cooling and discharging primary fuel and secondary fuel according to the present invention.
FIG. 8 is a schematic view illustrating a conventional fuel injection valve and a conventional dual fuel apparatus.

### <Description of Symbols>

(100): Nozzle holder
(110): Fuel valve block
(130): Bush
(131): Pilot fuel main passage
(134): Drain line
(135): Needle spring
(139): Primary fuel drain line
(140): Dual hybrid nozzle block
(141): Spring tension adjustment bolt
(142): Spring support
(143): Main needle valve
(160): Pilot nozzle hole
(161): Main nozzle hole
(170): Fuel main passage pipe
(200): Tension adjustment nut
(300): Residual pressure maintaining valve
(501): Pressure piston
(502): Primary fuel pressing piston
(503): Primary fuel pressing piston spring
(504): Fuel pressing hole
(505): Pressing piston head
(506): Cylinder/needle valve
(301): Chamber A
(302): Chamber B

### Mode for Invention

Hereinafter, exemplary embodiments of the present invention will be described herein below with reference to the accompanying drawings. Further, in the following description of the present invention, a detailed description of associated known functions or elements will be omitted when it may make the subject matter of the present invention rather unclear.

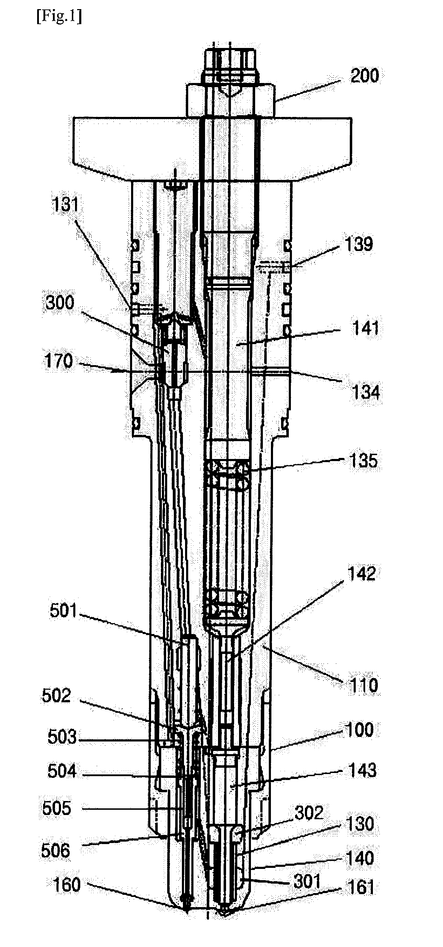

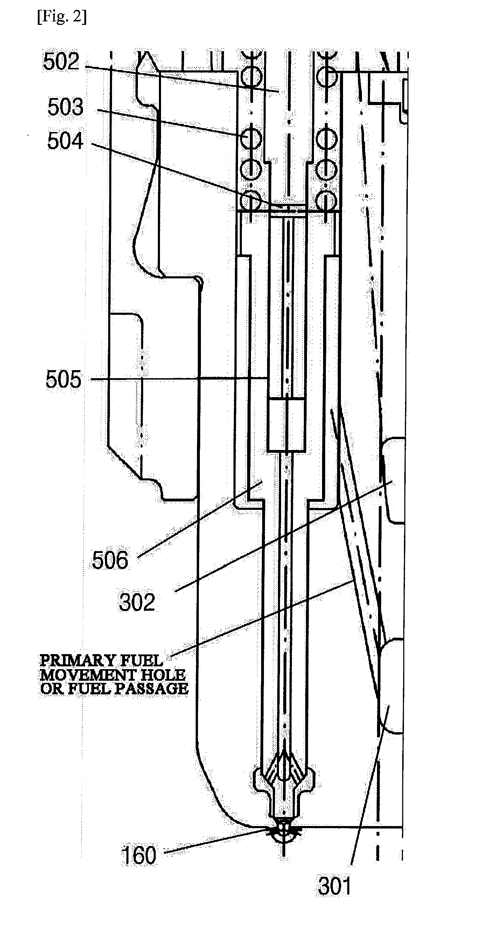

FIG. 1 is an example cross sectional view illustrating an exemplary embodiment of the present invention and FIG. 2 is an enlarged view of a portion of FIG. 1. As illustrated, the configuration of the present invention relates to a fuel injection valve capable of injecting fuel of the same system or dual fuel and is applied to an engine using the dual fuel by injecting two kinds of fuel from one valve and two pipes within a fuel injection valve which injects fuel to a cylinder according to pressure of fuel discharged from a fuel pump or a gas pipe and tension of a spring in an engine for a large vessel, a medium sized engine, and a gas engine, wherein a position of a needle is connected to a bottom of a nozzle such that an SAC volume through primary and secondary injection is minimized, thereby providing a diesel engine and a gas engine having improved combustion performance and higher fuel efficiency.

Also, in using primary fuel and secondary fuel, instead of using an external high pressure pump or controlling the dual fuel by a control of an electronic apparatus, an internal pumping, which is a main feature of the present invention, is pressed by the secondary fuel to pump and inject the primary fuel, and the injected primary fuel is used to cool high temperature around the secondary fuel.

To this end, the present invention includes a fuel valve block 110 having a fuel passage formed inside thereof, wherein the primary and the secondary fuel is introduced thereto through a high pressure pipe, a nozzle holder 100 surrounding an entire fuel valve, a primary fuel piston spring 503 which operates to move upward or downward according to pressure of the secondary fuel, a needle spring 135, a cylinder/needle valve 506 which is moved upward or downward by the pressure of the secondary fuel to inject the primary fuel, a main needle valve 143 which injects the primary fuel by moving upward or downward according to the pressure of the secondary fuel which has already injected the primary fuel, a pilot nozzle hole 160 which injects the primary fuel which is the pilot fuel to a cylinder located at a lower portion thereof, and a dual hybrid nozzle block 140 on which a main nozzle hole 161 is fabricated, wherein the main nozzle hole 161 injects the secondary fuel which is the main fuel to the cylinder located at the lower portion thereof.

In the present invention having the above configuration, the dual fuel, i.e., fuel such as heavy fuel oil (HFO), marine diesel oil (MDO) used in the diesel engine and gas fuel using a natural gas can be injected from two nozzles within one fuel injection valve such that efficient injection is possible in a case of using fuel systems of the same series, i.e., HFO as the secondary fuel which is the main fuel and MDO as the primary fuel which is the pilot fuel.

Also, when using the dual fuel, the MDO may be used as the primary fuel for ignition and a gas may be used as the secondary fuel which is the main fuel may be used for injection.

Specifically, it can be seen that a spring tension bolt 141 for adjusting pressure of the needle spring 135 installed inside a cylinder axis in which secondary main fuel system elements are installed and a tension adjustment nut 200 for controlling and fixing a tension adjustment state by the spring tension bolt 141 is installed at an upper portion thereof.

The primary fuel used in the present invention stands by at a low pressure through a pilot fuel main passage 131 up to the pilot nozzle hole 160, and this fuel serves to cool around the secondary fuel while being responsible for circulation within the injector.

When the secondary fuel which is the main fuel introduced through a main fuel main passage 170 pushes a pressure piston 501 for pressing the primary fuel (MDO, diesel fuel, etc.) by pressure received from a pump, a primary fuel pressing piston 502 which is a main piston that is supported by the primary fuel piston spring 503 is moved downward to press the primary fuel in the cylinder/needle valve 506 at high pressure such that the cylinder/needle valve 506 is operated by a pressure difference per cross section area to inject the primary fuel through the pilot nozzle hole 160 which is a primary fuel injection hole.

When the injection is completed, the pressure piston 501 which presses the primary fuel needs to be restored, and to this end, pressure is drained from a residue pressure maintaining valve 300 to restore the pressure piston 501.

At the same time, the secondary fuel (HFO, gas, etc.) which is the main fuel, after pushing the pressure piston 501, arrives in an area of a chamber B 302 which is a hole shown in the drawing and stands by up to an entrance of the main nozzle hole 161, and the main needle valve 143 is opened by high pressure to inject the secondary fuel which is the main fuel to the main nozzle hole 161.

Thus, in a dual fuel injection valve using two kinds of fuel comprising main and secondary fuel, the primary fuel which is the pilot fuel receives pressure of the secondary fuel which is the main fuel to form high pressure within the cylinder/needle valve 506 and inject the primary fuel, as is the main feature of the present invention, and then the secondary fuel which finishes pressing the primary fuel provides pressure difference used to open the main needle valve 143 by its own high pressure.

The pilot fuel used herein refers to the marine diesel oil (MDO) which generally has good combustion and injection in the diesel engine and the secondary fuel which is the main fuel refers to the heavy fuel oil (HFO).

Also in a case of the gas engine, fuel such as the MDO is used for ignition when injecting the pilot fuel and the main fuel refers to a gas used for LNG or a general gas engine.

A reference number 505 which has not been described refers to a piston head, a reference number 134 refers to a drain line for discharging leak fuel and air discharged from the residue pressure, and a reference number 142 refers to a spring support.

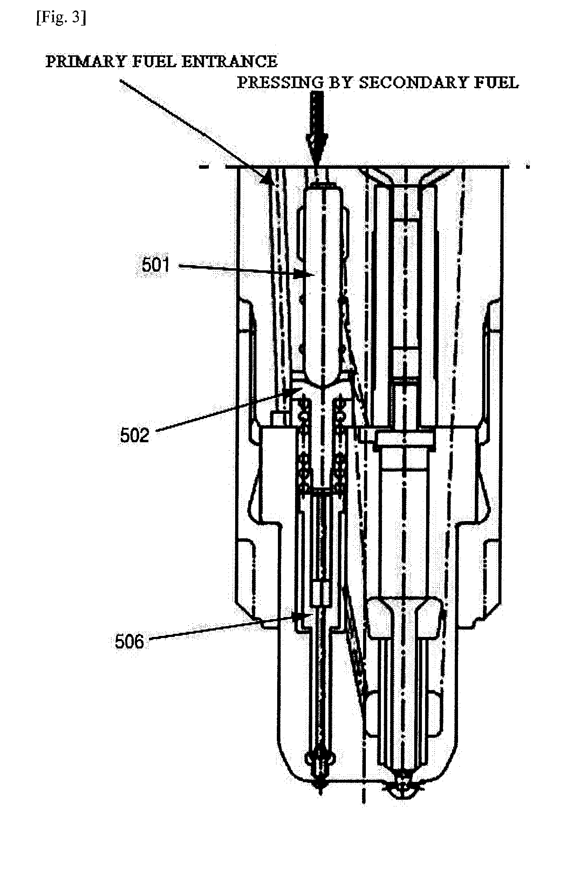

FIG. 3 is an example cross sectional view illustrating an exemplary embodiment prior to pressing a dual fuel pressure piston by the HFO, gas fuel and prior to an operation of opening fuel by the MDO.

The illustrated primary fuel flows under general pressure, instead of high pressure, through the pilot fuel main passage 131 as shown in FIG. 1 and FIG. 2, and preparation of fuel stands by up to the pilot nozzle hole 160. In other words, as illustrated, the primary fuel and the secondary fuel are in stand-by and, prior to pumping the secondary fuel, the primary fuel is introduced at low pressure to be near the pressure piston 501 - the cylinder/needle valve 506, and when not being pressed by the pressure piston 501, a fuel pressing hole 504 is opened such that the primary fuel stands by up to near the pilot nozzle hole 160.

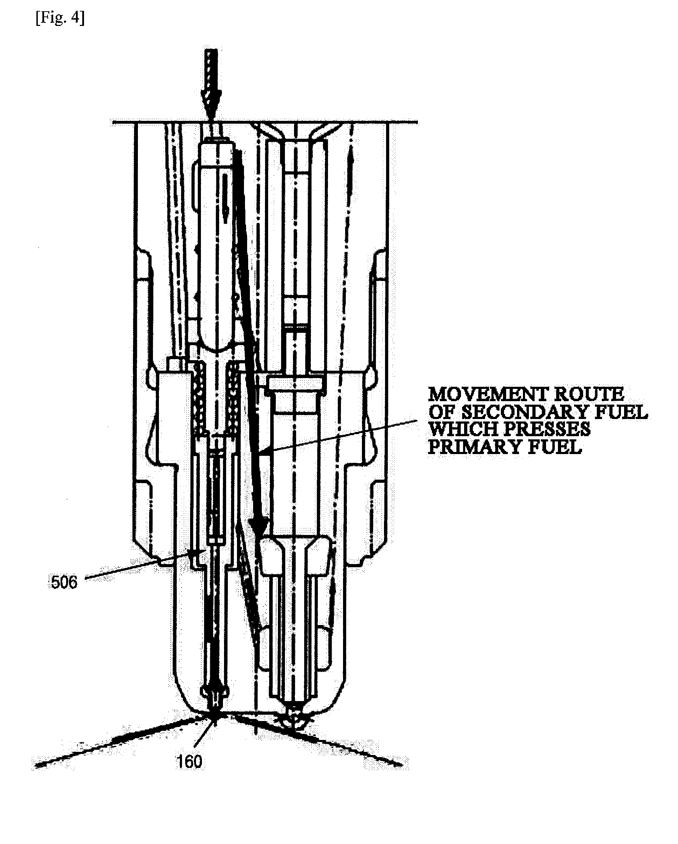

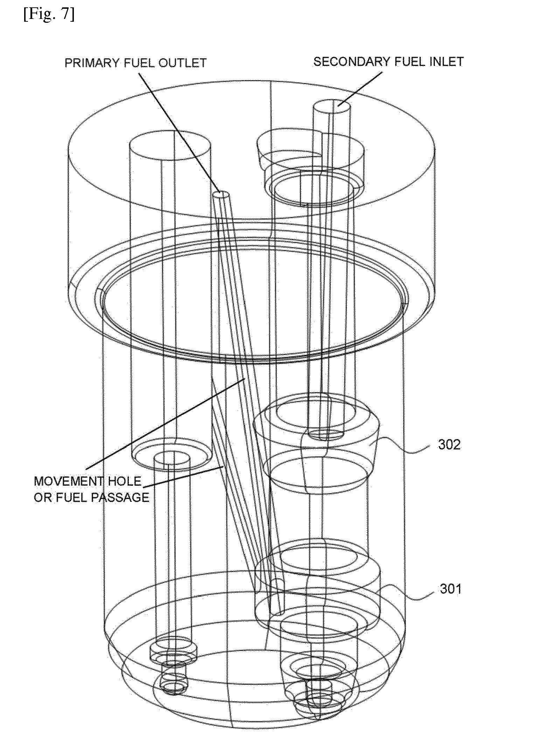

FIG. 4 is an example cross sectional view illustrating an exemplary embodiment in which the pressure piston 501 is pushed for pumping by pressure of HFO, gas fuel such that fuel pressure which opens the primary fuel (pilot fuel, MDO) is operated to discharge fuel oil according to the present invention. In FIG. 4, a fuel passage corresponding to a moving route of the secondary fuel in red is not clearly shown in FIG. 1 through FIG. 4; however, the fuel passage corresponds to a fuel passage indicated by a secondary fuel entrance in FIG. 7, which will be described later.

As illustrated, pressing by the secondary fuel which is the main fuel is performed under high pressure according to a location of the fuel pressing hole 504 which is shown enlarged in FIG. 2. When the fuel pressing hole 504 is pushed downward by subsequently conveyed pressure of the pressure piston 501 and the primary fuel pressing piston 502, pressure is added inside the cylinder to form high pressure, and thus, the cylinder/needle valve 506 which receives the high pressure operates due to a pressure difference between upper and lower portions and the pilot nozzle hole 160 which discharges the primary fuel is opened to perform injection.

When primary fuel injection is finished, pressure is drained to the residue pressure maintaining valve 300 which restores the pressure piston 501 and the primary fuel pressing piston 502, thereby restoring the piston. At the same time, the primary fuel cylinder/needle valve 506 is closed, and the primary fuel is switched to lower pressure such that the primary fuel is directed to an area of a chamber A 301, which is a cooling area of the secondary fuel and located at a lower portion of the main needle valve 143, to cool the secondary fuel at high temperature, and subsequently, the primary fuel is drained outside of the injection valve through a primary fuel drain line 139.

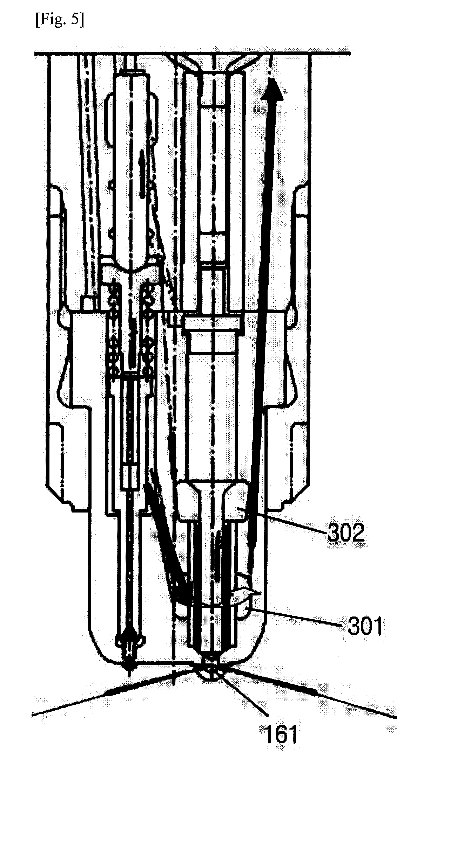

FIG. 5 is an example cross sectional view illustrating an exemplary embodiment of discharging fuel oil after fuel pressure which opens the main fuel is operated according to the present invention. As illustrated, the high pressure of the secondary fuel which presses the primary fuel, as described in FIG. 4, arrives to the area of the chamber B 302 and then stays around the main needle valve 143, and the main needle valve 143 is opened by a pressure difference per cross section area and the main fuel which is the secondary fuel is injected through the main nozzle hole 161.

Also, a bush 130 as illustrated serves as an anti-confused fuel bush which prevents mixing of the primary fuel which is the pilot fuel and the secondary fuel which is the main fuel as well as a medium for cooling and heat exchanging high temperature of the main nozzle hole 161 at the area of the chamber A 301.

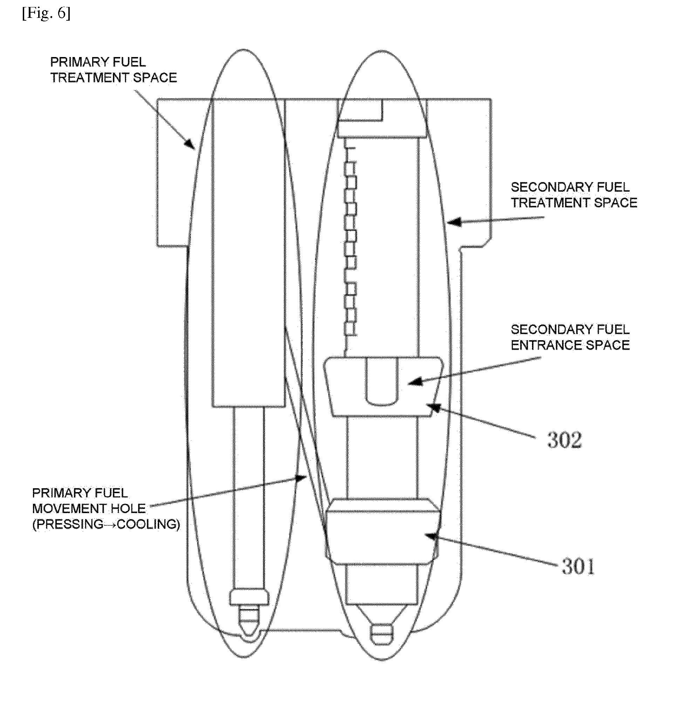

FIG. 6 is a schematic view illustrating a dual hybrid nozzle block portion according to the present invention, wherein a right side is an injection hole for the main fuel and a left side is a pilot injection hole.

FIG. 7 is an internal configuration view illustrating an entire configuration of a nozzle including a chamber for cooling and discharging primary fuel and secondary fuel according to the present invention, and as illustrated, the primary fuel is pressed to be injected and the rest thereof enters to the chamber A to cool the secondary fuel and then is discharged to a primary fuel outlet, and the secondary fuel presses a primary fuel piston and then enters to the chamber B.

The present invention is not limited to particular preferable exemplary embodiments described above and it will be understood by those of ordinary skill in the art that various modifications may be made without departing from the spirit and scope of the present invention as defined by the following claims.

## Claims

1. A dual fuel injection valve having a pumping nozzle for a diesel engine and a gas engine, in a fuel injection valve for the diesel engine or the gas engine for injecting fuel to a cylinder, the dual fuel injection valve comprising:
a fuel valve block (110) in which a fuel passage to which first and secondary fuel is introduced through a high pressure pipe is formed inside thereof, the first and secondary fuel being the same fuel system or different fuel systems;
a cylinder/needle valve (506) which moves upward by a pressure difference of the secondary fuel introduced through the fuel passage formed in the fuel valve block (110) to inject the primary fuel to a pilot nozzle hole; and
a main needle valve (143) which, after injecting the primary fuel by pressing the cylinder/needle valve (506), moves upward by the pressure difference of the secondary fuel introduced through a connected fuel passage to inject the primary fuel to a main nozzle hole (161).

2. The dual fuel injection valve of claim 1, wherein the cylinder/needle valve (506) comprises:
a pressing piston head portion (505) formed on an upper portion thereof by groove machining;
a primary fuel pressing piston (502) having a lower portion inserted to the pressing piston head portion (505) and a fuel pressing hole (504) formed at a certain point thereof, the primary fuel pressing piston (502) being elastically supported by a primary fuel piston spring (503);
a pressure piston (501) connected to a residue pressure maintaining valve and a fuel main passage pipe through a fuel passage to receive pressure of the secondary fuel and to press an upper portion of the primary fuel pressing piston (502); and
the residue pressure maintaining valve (300) of which upper portion is connected to the fuel passage in order to restore the pressure piston (501) which is pressed for injecting the primary fuel.

3. The dual fuel injection valve of claim 1, wherein, when the primary fuel cylinder/needle valve (506) is closed, the primary fuel is switched to lower pressure such that the primary fuel is drained outside of the injection valve through a primary fuel drain line (139) via an area of a chamber A (301), which is a cooling area of the secondary fuel and located at a lower portion of the main needle valve (143).

4. The dual fuel injection valve of claim 1, wherein a bush (130) is installed around the main needle valve (143) such that the bush (130) prevents mixing of the primary fuel which is pilot fuel and the secondary fuel which is main fuel introduced to a chamber B (302) and serves as a medium for cooling and heat exchanging high temperature of a main nozzle hole (161) at an area of a chamber A (301).
